# EUROPEAN PATENT SPECIFICATION

(11) **EP 3 918 500 B1**
(45) Date of publication and mention of the grant of the patent: **24.04.2024**
(21) Application number: 19712363.1
(22) Date of filing: 05.03.2019
(51) Int. Cl.: G06F 21/55, G06F 21/56, G06F 21/76, H04L 9/40

(54) **MACHINE LEARNING-BASED ANOMALY DETECTIONS FOR EMBEDDED SOFTWARE APPLICATIONS**
AUF MASCHINENLERNEN BASIERENDE DETEKTIONEN VON ANOMALIEN FÜR EINGEBETTETE SOFTWAREANWENDUNGEN
DÉTECTIONS D'ANOMALIE BASÉES SUR L'APPRENTISSAGE MACHINE POUR DES APPLICATIONS LOGICIELLES INTÉGRÉES

(43) Date of publication of application: 08.12.2021
(73) Proprietor: Siemens Industry Software Inc., Plano, TX 75024 (US)
(72) Inventor: VELLER, Yossi, 46325 Hertzliya (IL); MOSHE, Guy, 46320 Hertzliya (IL)
(74) Representative: Horn Kleimann Waitzhofer Schmid-Dreyer Patent- und Rechtsanwälte PartG mbB
(86) International application number: PCT/US2019/020701
(87) International publication number: WO 2020/180300

(56) References cited:
- CN-A- 107 392 025
- US-A1- 2014 114 442
- US-A1- 2018 268 142

## Description

### BACKGROUND

With continued improvements in technology, software applications are becoming increasingly prevalent. Embedded software applications may control machines or devices in physical systems, such as automotive vehicles, security systems, home appliances, toys, digital watches, biological devices, and more. Embedded systems that include embedded software may be targets of security attacks through malware, viruses, spyware, and the like.
US 2018/268142 A1 discloses a method that includes obtaining current hardware performance data, including hardware performance counter data, for a hardware device executing a first process associated with pre-recorded hardware performance data representative of the first process' normal behavior, and determining whether a malicious process is affecting performance of the first process based on a determination of an extent of deviation of the obtained current hardware performance data corresponding to the first process from the pre-recorded hardware performance data representative of the normal behavior of the first process.
CN 107 392 025 A discloses a suspicious application program detecting method based on deep learning. The suspicious application program detecting method includes: acquiring feature vectors of an application program; performing static analysis and dynamic analysis on the application program in a training set and a test set respectively; extracting static features and dynamic features; and combining the static features and the dynamic features to obtain the feature vectors of the application program; training a DBN (deep belief network) by making use of the feature vector of the application program in the training set; inputting the feature vector of the application program in the test set into the trained DBN; and performing safety detection.

### BRIEF DESCRIPTION OF THE DRAWINGS

Certain examples are described in the following detailed description and in reference to the drawings.
Figure 1 shows an example of a system that supports machine learning-based anomaly detections for embedded software applications.
Figure 2 shows an example of anomaly detection model training via machine learning by an anomaly model training engine.
Figure 3 shows an example training of task-specific anomaly detection models by the anomaly model training engine.
Figure 4 shows an example run-time characterization of embedded application behavior by an anomaly detection engine.
Figure 5 shows an example of logic that a system may implement to support learning phase training of anomaly detection models.
Figure 6 shows an example of logic that a system may implement to support anomaly detections during run-time executions of embedded software.
Figure 7 shows an example of a system that supports machine learning-based anomaly detections for embedded software applications.

### DETAILED DESCRIPTION

The invention is defined in the appended claims.
The discussion below refers to embedded software applications, which may also be referred to as embedded software or embedded applications. As used herein, embedded software applications may refer to software that executes on a physical system aside from a desktop or laptop computer. Such physical systems can also be referred to as embedded systems, and are often limited in computing and memory capabilities. In many instances, embedded software applications may interface with machines or other physical elements of an embedded system, and embedded applications may thus be used to monitor or control machines or devices in cars, telephones, modems, robots, appliances, security systems, and more.

The disclosure herein may provide systems, methods, devices, and logic that support anomaly detections for embedded software applications via machine learning. As described in greater detail below, the machine learning-based anomaly detection features disclosed herein may account for specific application parameters that affect activity (e.g., execution times) of embedded software applications. Anomaly detection models may be trained that specifically account for application parameters, and machine learning models may correlate application parameters to execution activity (e.g., as measured by instruction counts or execution cycles) to characterize normal and abnormal application behavior. By specifically accounting for application parameters in model training, the machine learning-based anomaly detection features presented herein may provide resource efficient mechanisms to track application behavior and identify abnormalities, doing so by accounting for ways in which application context impacts execution activity.

These and other benefits of the disclosed machine learning-based anomaly detection features are described in greater detail herein.

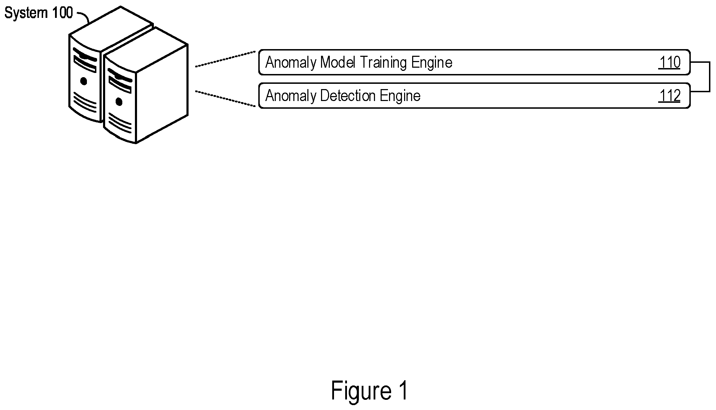

Figure 1 shows an example of a system 100 that supports machine learning-based anomaly detections for embedded software applications. The system 100 may take various forms, and may include a single or multiple computing devices such as application servers, compute nodes, desktop or laptop computers, smart phones or other mobile devices, tablet devices, embedded controllers, or any hardware component or physical system that includes embedded software. The system 100 may take the form of any system with computing capabilities by which anomaly detection models for embedded software applications can be trained, used, or otherwise applied.

As described in greater detail herein, the system 100 may support machine learning-based anomaly detections in a learning phase, a run-time phase, or both. In a learning phase, the system 100 may use machine learning to characterize activity of embedded software applications according to different application parameters that impact execution activity. Via machine learning and training sets comprised of sampled application parameters and measured application activity, the system 100 may construct anomaly detection models to detect anomalous behavior of embedded software applications. In a run-time phase, the system 100 may access trained anomaly detection models to detect abnormalities based on measured run-time activity of embedded software applications for sampled run-time application parameters. Accordingly, the system 100 may support anomaly detections in embedded software applications via anomaly detection models constructed via machine learning.

The system 100 may be implemented in various ways to provide any of the machine learning-based anomaly detection features described herein. As an example implementation, the system 100 shown in Figure 1 includes an anomaly model training engine 110 and an anomaly detection engine 112. The system 100 may implement the engines 110 and 112 (and components thereof) in various ways, for example as hardware and programming. The programming for the engines 110 and 112 may take the form of processor-executable instructions stored on a non-transitory machine-readable storage medium and the hardware for the engines 110 and 112 may include a processor to execute those instructions. A processor may take the form of single processor or multiprocessor systems, and in some examples, the system 100 implements multiple engines using the same computing system features or hardware components (e.g., a common processor or a common storage medium).

In operation, the anomaly model training engine 110 may utilize machine learning to train anomaly detection models based on application behavior of embedded software applications. For instance, the anomaly model training engine 110 may be configured to sample an embedded software application at given sampling points to obtain (i) activity measures of the embedded software application since a previous sampling point and (ii) application parameters for the embedded software application at the given sampling points. The anomaly model training engine 110 may also be configured to generate training data based on the activity measures and the application parameters obtained for the given sampling points and construct an anomaly detection model using the training data. The anomaly detection model may be configured to provide a determination of whether the embedded software application exhibits abnormal behavior based on activity measure and application parameter inputs.

In operation, the anomaly detection engine 112 may access anomaly detection models to provide real-time anomaly detection capabilities during run-time executions of embedded software applications. Such run-time executions may refer to or include executions of embedded software applications in physical systems that the embedded software applications are designed to operate in (e.g., medical devices, airplane controllers, anti-lock braking systems, etc.). In some implementations, the anomaly detection engine 112 may be configured to sample an embedded software application at sampling points during a run-time execution of the embedded software application to obtain an activity measures and application parameters during the run-time execution. The anomaly detection engine 112 may also be configured to provide, as inputs to the anomaly detection model, the activity measure and the application parameters sampled during the run-time execution and determine whether the embedded software application exhibits abnormal behavior based on an output from the anomaly detection model for the provided inputs.

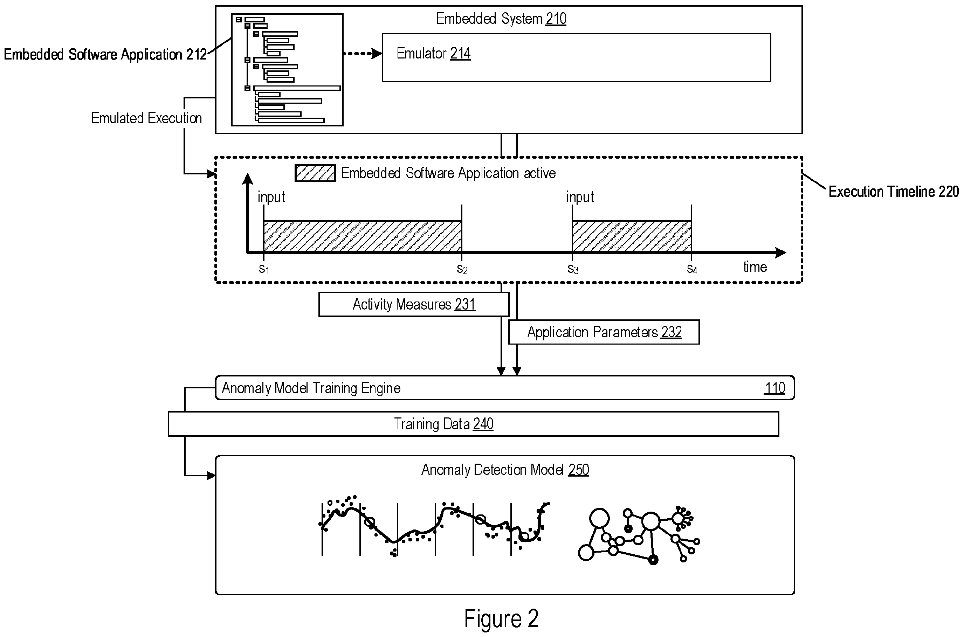

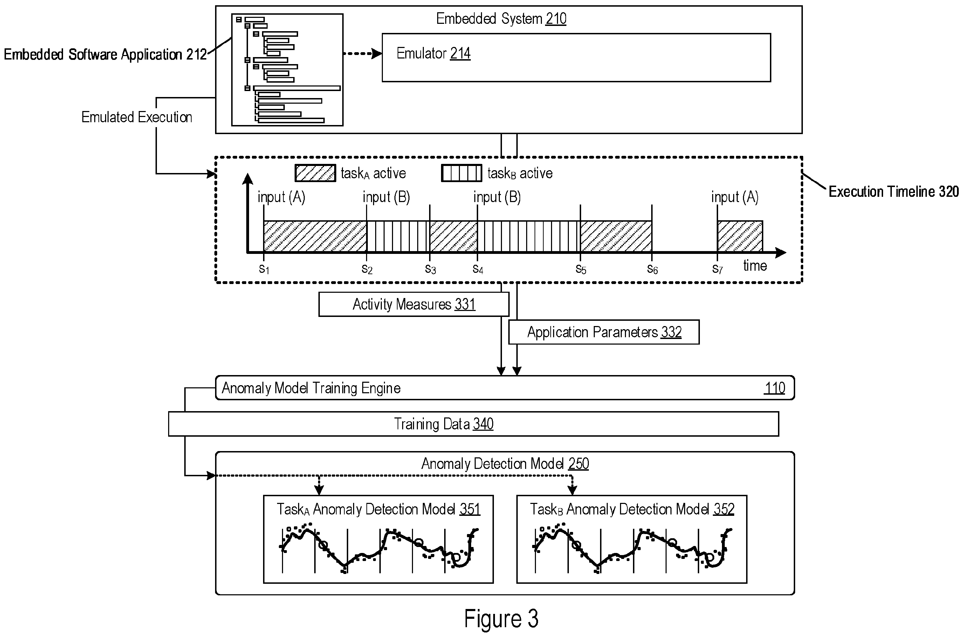

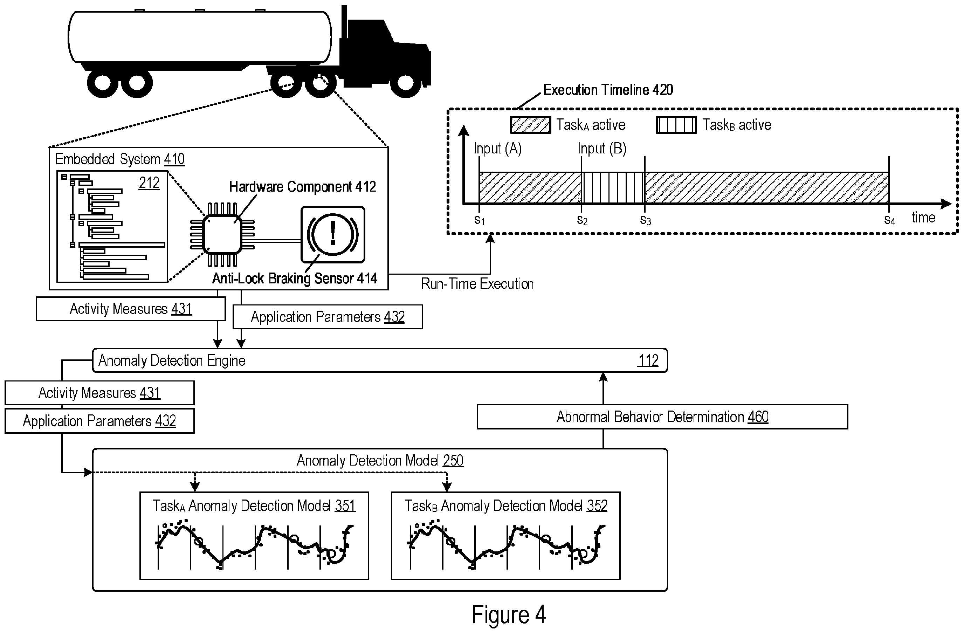

These and other machine learning-based anomaly detection features according to the present disclosure are described in greater detail next. In particular, example features with regards to training anomaly detection models in learning phases are described in connection with Figures 2 and 3. Example features with regards to use of anomaly detection models in run-time phases to detect anomalous application behavior is described in connection with Figure 4.

Figure 2 shows an example of anomaly detection model training via machine learning by the anomaly model training engine 110. During a learning phase, the anomaly model training engine 110 may track behavior of an embedded software application and process tracked application behavior into training data to train an anomaly detection model.

As an illustrative example, Figure 2 depicts an embedded system 210. The embedded system 210 may be any system that implements or includes embedded software, such as including the embedded software application 212 shown in Figure 2. In different embedded system implementations, execution of the embedded software application 212 may be performed by different computing resources. In some instances, the embedded software application 212 may be implemented via firmware, e.g., as component of a microcontroller, system-on-a-chip ("SoC") or other hardware, many times with limited memory or processor capabilities. In other instances, emulation or simulation systems may be utilized to execute the embedded software application 212, which may be advantageous during the learning phase when execution of the embedded software application 212 need not be constrained by the limited memory or processing capabilities in contrast with actual run-time implementations. In the example shown in Figure 2, the embedded system 210 includes an emulator 214 which may perform executions of the embedded software application 212 during a learning phase for training anomaly detection models.

As described in greater detail herein, the anomaly model training engine 110 may construct anomaly detection models via machine learning. Anomaly detection models can characterize application behavior as normal or abnormal. To train anomaly detection models, the anomaly model training engine 110 may collect application data during executions of the embedded software application 212 in a learning phase. Then, the anomaly model training engine 110 may train anomaly detection models with training data comprised of the application data sampled during executions of the embedded software application 212.

According to the present disclosure, the anomaly model training engine 110 may sample selected types of application data to train anomaly detection models. In particular, the anomaly model training engine 110 may obtain (i) activity measures and (ii) application parameters at various sampling points during execution of the embedded software application 212.

An activity measure may refer to a measurable quantity of activity for the embedded software application 212, such as an instruction count. To determine instruction counts, the anomaly model training engine 110 may access tracked instruction executions by system hardware (e.g., performance monitor units), system software (e.g., operating system functions, APIs, etc.), or a combination of both. Obtained instruction counts for the embedded software application 212 may be useful as an activity indicator in that instruction counts may disregard memory access costs and cache hit/miss ratios, which may introduce random variations in activity measures and lower the accuracy of trained anomaly detection models. Another example activity measure that the anomaly model training engine 110 may obtain is application execution times. To measure execution times, the anomaly model training engine 110 may access cycle counters of CPU cores or utilize system drivers to extract cycle data between different execution points of the embedded software application 212.

By determining activity measures at different execution points, the anomaly model training engine 110 may obtain quantitative measures of application activity by the embedded software application 212 during normal behavior (i.e., executions unaffected by malware intrusions). However, execution times, instruction counts, and mere quantitative activity measures may present an incomplete picture of embedded software executions. Execution activity may increase or decrease depending on the execution context of the embedded software application 212, and the same software operation, task, or execution thread may have (significantly) different execution times based on applicable application parameters during execution. Example application parameters that may affect sampled activity measures include memory conditions, input data sizes, input data content (e.g., high resolution data vs. low resolution data), application control parameters (e.g., high accuracy and low accuracy operation modes), system power constraints, and more.

To account for such variations, the anomaly model training engine 110 may also sample the embedded software application 212 for application parameters applicable to sampled activity measures. An application parameter may refer to any system, application, or global parameter that affects execution of the embedded software application 212. The anomaly model training engine 110 may sample application parameters of the embedded software application 212 in various ways. For instance, the anomaly model training engine 110 may access a static memory assigned to an application task or thread to obtain stored parameters for the particular application task or thread of the embedded software application 212. Additionally or alternatively, the anomaly model detection may access global variables stored in a global memory or obtain long term state values applicable to the embedded system 210, the embedded software application 212, or combinations of both.

In some implementations, the anomaly model training engine 110 may implement parameter access functions through which the embedded software application 212 itself may provide applicable application parameters during sampling. Implemented parameter access functions may take the form of APIs to extract application parameters in a non-intrusive or non-destructive manner. To illustrate, an embedded system may store input data or operation parameters (e.g., as specified in an input communication frame received by the embedded software application 212) in communication controller memories, system registers, or FIFO queues. Memory read accesses to such memory structures may be destructive operations and/or inaccessible without driver level priority. As such, parameter access functions provided by the anomaly model training engine 110 may provide non-destructive mechanisms to sample relevant application parameters during executions of the embedded software application 212.

As another implementation feature, the anomaly model training engine 110 may pre-process input data provided to the embedded software application 212 to extract applicable application parameters. For instance, the anomaly model training engine 110 may pre-process inputs in the form of image or video files to determine file indicators, data patterns, or multi-media characteristics that the anomaly model training engine 110 may obtain as a sampled application parameter for embedded software application 212 at selected sampling points.

In the various ways described herein, the anomaly model training engine 110 may sample activity measures and application parameters during execution of the embedded software application 212. The particular execution points at which the activity measures and application parameters are sampled may be preselected by the anomaly model training engine 110. To help explain such features, an execution timeline 220 is shown in Figure 2 to illustrate different sampling points at which the anomaly model training engine 110 may sample application data during emulated execution of the embedded software application 212. As shown in the execution timeline 220, the anomaly model training engine 110 may select the sampling points s₁, s₂, s₃, and s₄ at which to sample the embedded software application 212 for activity measures and application parameters.

At each selected sampling point s₁, s₂, s₃, and s₄, the anomaly model training engine 110 may obtain an activity measure (e.g.,. indicative of application activity since a prior sampling point) as well as application parameters applicable to the sampling point. Thus, at sampling point s₂, the anomaly model training engine 110 may determine an activity measure (e.g., executed instruction count of the embedded software application 212) since a prior sampling point s₁ and the application parameters in effect at sampling point s₂. In Figure 2, the anomaly model training engine 110 obtains the set of activity measures 231 and application parameters 232, sampled from the embedded software application 212 at the depicted sampling points s₁, s₂, s₃, and S4.

In some implementations, the anomaly model training engine 110 selects sampling points for an embedded software application 212 to cover active execution periods of the embedded software application 212. The execution timeline 220 in Figure 2 shows different times during which the embedded software application 212 is active, depicted as the sections along the execution timeline 220 patterned with diagonal lines (which may also be referred to as active execution periods). The embedded software application 212 may be referred to as active when some or all of the computing resources of an embedded system are actively used to execute the embedded software application 212. The embedded software application 212 may be referred to as inactive (or idle) when computing resources of the embedded system or unused or idle.

In many embedded systems, embedded software is designed to receive an input, process the input, and generate an output. Embedded software applications are often used in physical systems to monitor system components, and monitored inputs may occur during operation of such physical systems (e.g., sensing of a particular signal, receiving a data file to process, etc.). The active execution periods of embedded software may include the time after an input is received as well as the time period to process the input until a corresponding output is generated. After the output is generated, the embedded software may go inactive until a subsequent input is received.

An example sequence of active execution and inactive execution periods by the embedded software application 212 is illustrated in the execution timeline 220 of Figure 2. At sampling point s₁, the embedded software application 212 may go active (or, put another way, enter an active execution period) responsive to receiving an input. The embedded software application 212 may remain active until sampling point s₂ when an output (not shown) is generated. From sampling points s₂ to s₃, the embedded software application 212 may be in an inactive execution period, and resume active execution from sampling points s₃ to s₄ to process the input received at sampling point s₃.

The anomaly model training engine 110 may determine to sample the embedded software application 212 responsive to the embedded software application 212 going active, inactive, or both. Put another way, the anomaly model training engine 110 may select samplings points such that the embedded software application 212 is sampled responsive to received inputs, generated outputs, or combinations of both. Put in yet another way, the anomaly model training engine 110 may sample the embedded software application 212 in a manner to obtain activity measures for given active execution periods as well as the applicable application parameters for each given active execution period. (The anomaly model training engine 110 may also sample the embedded software application 212 on a task-specific basis, as described in greater detail below with regards to Figure 3). In such a manner, the anomaly model training engine 110 may select sampling points at which to sample the embedded software application 212 for activity measures and application parameters.

From sampled activity measures and application parameters, the anomaly model training engine 110 may construct training data to train anomaly detection models. In Figure 2, the anomaly model training engine 110 generates the training data 240, which the anomaly model training engine 110 may construct to include some or all of the activity measures 231 and application parameters 232 sampled from the embedded software application 212. In some instances, the anomaly model training engine 110 may filter the sampled application parameters 232 to determine a selected subset of relevant application parameters (e.g., that most impact activity of the embedded software application). In effect, the anomaly model training engine 110 may perform parameter selection processes to select relevant machine learning features to train anomaly detection models. In performing the parameter selection processes, the anomaly model training engine 110 may employ statistical correlation techniques, consistency checks, or a combination of both to determine a specific subset of application parameters from which to characterize application activity.

The anomaly model training engine 110 may construct an anomaly detection model using the prepared training data 240. In Figure 2, the anomaly model training engine 110 provides the training data 240 as a training set to train the anomaly detection model 250. To train the anomaly detection model 250, the anomaly model training engine 110 may utilize any number of machine learning techniques. For instance, the anomaly detection model 250 may implement any number of supervised, semi-supervised, unsupervised, or reinforced learning models to characterize behavior of embedded software applications based on sampled activity measures and application parameters. The anomaly detection model 250 may include support vector machines, Markov chains, context trees, neural networks, Bayesian networks, or various other machine learning components.

In particular, the anomaly model training engine 110 may construct the anomaly detection model 250 to provide a determination of whether the embedded software application exhibits abnormal behavior based on activity measure and application parameter inputs. In some implementations, the anomaly detection model 250 may take the form of a support vector machine (SVM) and provide an abnormality determination for an activity measure input and application parameters input.

The output provided by the anomaly detection model 250 may be a binary value indicative of whether the anomaly detection model 250 has identified anomalous behavior of the embedded software application 212. In other examples, the anomaly detection model 250 may provide a probability value that the provided activity measure and application parameter inputs are indicative of abnormal application behavior. As yet another example, the anomaly model training engine 110 may provide a predicted activity measure for application parameter inputs, through which abnormal application behavior may be detected based on comparison with a run-time activity measure sampled from embedded software. Any such anomaly detection techniques are contemplated via the anomaly detection model 250, and discussed further below with regards to Figure 4.

As described above, the anomaly model training engine 110 may construct an anomaly detection model 250 from application data sampled from the embedded software application 212. In the example of Figure 2, the anomaly model training engine 110 trains the anomaly detection model 250 using activity measures and application parameters sampled during execution. In some implementations, the anomaly model training engine 110 may sample application data (in particular, activity measures and application parameters) and train anomaly detection models at a finer granularity than general application behavior. For instance, the anomaly model training engine 110 may sample and characterize task-specific behavior as normal or abnormal. Such features are discussed next for Figure 3.

Figure 3 shows an example training of task-specific anomaly detection models by the anomaly model training engine 110. An application task (also referred to task, execution thread, or application thread) may refer to any execution sequence of embedded software, e.g., initiated threads to perform a specific task or otherwise spawned by an instance of embedded software. Application tasks may also refer to a sequence of programmed instructions that can be managed by a scheduler or other operating system logic. Execution of embedded software may include multiple active task executions, which may involve context switches, preemptions, and other interruptions between execution sequences of different application tasks. The anomaly model training engine 110 may train anomaly detection models on a task-specific basis, which may support characterization of normal or abnormal embedded application behavior on a task-specific basis.

To illustrate, Figure 3 depicts the embedded system 210 described in Figure 2, which includes the embedded software application 212 and emulator 214 for emulated application executions during a learning phase. Also shown in Figure 3, an example of an execution timeline 320 depicts multiple different tasks being executed as part of the embedded software application 212. In the execution timeline 320, an application task labeled as task_{A} is shown as active in the sections along the execution timeline 320 patterned with diagonal lines (also referred to as active execution periods for task_{A}). Also shown in the execution timeline 320 is another application task labeled as task_{B}, which is shown as active via the sections along the execution timeline 320 that are patterned with vertical lines.

The anomaly model training engine 110 may sample the embedded software application 212 at sufficient sampling points to determine an activity measure and application parameters for a given application task from task start to task completion, even when execution of the given application task is preempted by other application tasks. To do so, the anomaly model training engine 110 may sample the embedded software application 212 at execution points in which a given application task starts, pauses (e.g., due to preemption or a context switch), or completes. In the example shown in Figure 3, the execution timeline 320 depicts sampling points s₁, s₂, s₃, s₄, s₅, s₆, and s₇ at which the anomaly model training engine 110 samples the embedded software application 212 for activity measures and application parameters of task_{A} and task_{B}.

In the example shown in Figure 3, execution of task_{A} starts responsive to reception of an application input specific to task_{A} (labeled as input(A) in the execution timeline 320). Also in this example, task_{B} of the embedded software application is higher in priority, and preempts execution of task_{A}. Execution of task_{B} starts in response to reception by the embedded software application 212 of an input specific to task_{B} (labeled as input(B) in the execution timeline 320). As such, from sampling point s₁ (when execution of task_{A} starts responsive to Input(A)) to sampling point s₆ (when execution of task_{A} completes), two execution instances of task_{B} preempt execution of task_{A}. As seen in Figure 3, the anomaly model training engine 110 may sample the embedded software application 212 at specific execution points when task_{A} starts (sampling points s₁ and s₇), when task_{B} starts (sampling points s₂ and s₄), when task_{A} is preempted (which are also sampling points s₂ and s₄), when task_{B} completes (sampling points s₃ and s₅), when task_{A} resumes (also sampling points s₃ and s₅), and when task_{A} completes (sampling point s₆).

By sampling the embedded software application 212 at different task start, pause, or stop points, the anomaly model training engine 110 may determine an activity measure for the entirety of task_{A}, even as task_{A} is preempted at multiple execution points by execution instances of task_{B}. In Figure 3, the anomaly model training engine 110 samples the activity measures 331 and application parameters 332 from the embedded software application 212 during the execution timeline 320. The sampled activity measures 331 may include at least two activity measures for task_{B}, one for the instance of task_{B} executed from sampling point s₂ to s₃ and one for the instance of task_{B} executed from sampling point s₄ to s₅. The sampled application parameters 332 may include at least two sets of application parameters for task_{B}, one applicable for each execution instance of task_{B}. Moreover, the anomaly model training engine 110 may obtain an activity measure for the execution instance of task_{A} starting at sampling point s₁ and completing at s₆, which the anomaly model training engine 110 may determine as the sum of activity measures sampled from s₁ to s₂, s₃ to s₄, and s₅ to s₆. In a similar manner, the anomaly model training engine 110 may determine the particular application parameters applicable to task_{A} for the summed activity measure.

Accordingly, the anomaly model training engine 110 may sample the embedded software application 212 at different execution points on task-specific basis. In doing so, the anomaly model training engine 110 may identify a given application task being executed by the embedded software application 212 at a given sampling point (e.g., task_{A} was active up to sampling point s₂). Identification of an "active" application task during sampling may involve accessing OS system parameters indicative of a current thread, task, process, or other system indicator.

The anomaly model training engine 110 may also specifically construct training sets that differentiate between application data sampled for different application tasks. In Figure 3, the anomaly model training engine 110 prepares the training data 340 from the sampled activity measures 331 and application parameters 332. The training data 340 may be generated to include multiple, different training sets differentiated on a task-specific basis. In that regard, the training data 340 may include different training sets for task_{A} and task_{B} of the embedded software application 212.

The anomaly model training engine 110 may construct the anomaly detection model 250 to include multiple task-specific anomaly detection models, such as the task-specific anomaly detection models for task_{A} and task_{B} in Figure 3 shown as the models 351 and 352. In that regard, the anomaly model training engine 110 may provide a given set of task-specific training data to train a given task-specific anomaly detection mode, and training of multiple task-specific anomaly detection models may support characterization of abnormal application behavior on a task-specific basis. In some implementations, the anomaly model training engine 110 may construct the anomaly detection model 250 as multiple task-specific anomaly detection models, e.g., a distinct model for each of some or all of the application tasks supported by the embedded software application 212.

To further illustrate, the task-specific anomaly detection models 351 and 352 may provide task-specific characterizations of application behavior. For instance, the task_{A} anomaly detection model 351 may provide abnormal behavior determinations specific to task_{A} of the embedded software application 212, doing so based on activity measure and application parameter inputs specific to task_{A}. In a similar manner, the task_{B} anomaly detection model 352 may provide abnormal behavior determinations specific to task_{B} of the embedded software application 212. As a given task-specific anomaly detection models trained by the anomaly model training engine 110 may be specifically trained with application parameters applicable to a given task, trained task-specific anomaly detection models may be specifically tailored for task-specific contexts that impact execution activity of the embedded software application 212 on a task-specific basis.

In any of the ways described above, the anomaly model training engine 110 may support training of anomaly detection models in a learning phase. In particular, the anomaly model training engine 110 may use machine learning to train anomaly detection models configured to characterize embedded application behavior, doing so accounting for specific application parameters applicable during embedded software executions. Trained anomaly detection models may be accessed and used during a run-time phase to detect anomalous behavior of embedded software applications, as described next with regards to Figure 4.

Figure 4 shows an example run-time characterization of embedded application behavior by an anomaly detection engine 112. In Figure 4, an example of an embedded system 410 is implemented as part of a physical system, e.g., as a braking component of a tank truck. Although illustrated separately, the anomaly detection engine 112 and anomaly detection model 250 may be part of the embedded system 410 as well, e.g., sharing common computing resources such as memory or processor(s).

The embedded system 410 may include the embedded software application 212 embedded into a hardware component 412 (e.g., an embedded controller). In Figure 4, the hardware component 412 is in communication with an anti-lock braking sensor 414 of the tank truck, though near limitless other applications in physical systems are contemplated. In this example shown in Figure 4, the hardware component 412 may execute the embedded software application 212 to monitor braking conditions as sensed by the anti-lock braking sensor 414 (inputs to the embedded software application 212) and generate outputs based on the sensed conditions. Such real-world operation in the tank truck may be characterized as a run-time execution of the embedded software application 212 (e.g., within a physical system the embedded software application 212 is designed to operate in).

Also shown in Figure 4, the anomaly detection engine 112 may monitor behavior of the embedded software application 212 during run-time executions. To do so, the anomaly detection engine 112 may access the anomaly detection model 250 trained for embedded software application 212 during the learning phase (e.g., as described above). The anomaly detection engine 112 may sample the embedded software application 212 at selected sampling points to obtain activity measures and application parameters, including on a task-specific basis. The anomaly detection engine 112 may sample the embedded software application 212 in a consistent manner as the anomaly model training engine 110, including according to any of the sampling point selection features described herein (e.g., in Figures 2 and 3). Sampled activity measures and application parameters may be provided as inputs to the anomaly detection model 250, through which abnormal behavior determinations can be produced.

To illustrate through Figure 4, an example execution timeline 420 is shown during run-time execution of the embedded software application 212. In the execution timeline 420, task_{A} of the embedded software application 212 is shown as active in the sections along the execution timeline 420 patterned with diagonal lines. Active executive periods of task_{B} are also shown in the execution timeline 420 via the sections along the execution timeline 420 patterned with vertical lines. The anomaly detection engine 112 may sample the embedded software application at multiple sampling points during the run-time execution, including at any execution point in which an application task starts, pauses (e.g., is preempted), or completes. As shown in Figure 4, the anomaly detection engine 112 samples the embedded software application 212 at sampling points s₁, s₂, s₃, and s₄ of the execution timeline 420.

The anomaly detection engine 112 may obtain activity measures 431 and application parameters 432 for the embedded software application 212 specific to execution points at which the embedded software application 212 is sampled. The sampled activity measures 431 and application parameters 432 may be task-specific, e.g., including an instruction count or other activity measure for task_{B} from sampling point s₂ to s₃ as well as the task_{B}-specific application parameters from sampling point s₂ to s₃. In a consistent manner, the sampled activity measures 431 may include a summed activity measure for taskA from sampling points s₁ to s₂ and s₃ to s₄ as well as the application parameters in effect during this active execution period of task_{A}.

In some implementations, the anomaly detection engine 112 samples the embedded software application 212 to obtain application parameters consistent with the features used to train the anomaly detection model 250. In doing so, the anomaly detection engine 112 may sample a selected subset of the application parameters used by the embedded software application 212 or corresponding application task. The selected subset of application parameters sampled by the anomaly detection engine 112 may be the same as the selected subset of application parameters determined from the parameter selection processes by the anomaly model training engine 110 (which may be performed on a task-specific basis). Put another way, the anomaly detection engine 112 may sample the specific subset of (e.g., task-specific) application parameters used to train the anomaly detection models 250, 351, or 352 without having to sample other application parameters not used to train these models.

The anomaly detection engine 112 may provide sampled activity measures 431 and application parameters 432 as inputs to the anomaly detection model 250 to characterize application behavior of the embedded software application 212. For task-specific characterizations, the anomaly detection engine 112 may select among the multiple task-specific anomaly detection models (e.g., 351 and 352) to use for sampled activity measures 431 and application parameters 432 at sampling points s₁ to s₂ and s₃ to s₄. The anomaly detection engine 112 may do so based on a given application task being executed by the embedded software application 212 at the multiple sampling points, e.g., by providing sampled activity measures and application parameters for task_{A} as inputs to the task_{A} anomaly detection model 351 and providing sampled activity measures and application parameters for task_{B} to the task_{B} anomaly detection model 352.

The anomaly detection model 250 may provide an abnormal behavior determination 460 generated from the input activity measures 431 and application parameters 432. The abnormal behavior determination 460 may take the form of any type of output supported by the anomaly detection model 250 (including task-specific anomaly detection models 351 and 352). Example outputs include binary value outputs indicative of normal or abnormal application behavior, abnormality probabilities, and the like, any of which may be task-specific. Accordingly, the abnormal behavior determinations 460 may include task-specific outputs, each of which may characterize whether task-specific behavior of the embedded software application 212 is abnormal, and doing so based on specifically sampled application parameters. In the example of Figure 4, the abnormal behavior determination 460 may provide separate indications as to whether sampled application behavior for task_{A} and task_{B} are characterized as abnormal.

In some implementations, the anomaly detection engine 112 may access the anomaly detection model 250 during an inactive execution period of the embedded software application 212. The embedded system 410 may have limited computing/memory resources or be subject to precise timing constraints. To reduce timing interference or resource overhead for anomaly detections, the anomaly detection engine 112 may determine, during a run-time execution, that the embedded software application 212 enters an inactive execution period (e.g., at sampling point s₄). Responsive to such a determination, the anomaly detection engine 112 may provide sampled inputs (e.g., the sampled activity measure 431 and application parameters 432) to the anomaly detection model 250 and determine whether the embedded software application 212 exhibits abnormal behavior the embedded software application 212 during the inactive execution period (e.g., after sampling point s₄).

The anomaly detection engine 112 may determine that the embedded software application 212 exhibits abnormal behavior based on the abnormal behavior determination 260, which may include identification of the specific application task(s) with abnormal activity. Upon detection of abnormal behavior, the anomaly detection engine 112 may provide an abnormality alert, e.g., to a central monitoring system of the physical system, to a system operation system, or other logical entity configured to monitor operation of the physical system the embedded software application 212 supports. Accordingly, the anomaly detection engine 112 may support detection of abnormal application activity during run-time executions of embedded software.

As described herein, machine learning-based anomaly detection features may be provided in a learning phase and run-time phase. By sampling and training models specifically using both activity measures and application parameters, the machine learning-based anomaly detection features described herein may provide an efficient and accurate mechanism by which anomalous activity in embedded software can be identified. By learning application behavior based on these sampled aspects, the anomaly model training engine 110 and anomaly detection engine 112 may identify anomalous behavior independent of how malware infiltrates a system (e.g., form of intrusion need not be identified) and can further support detection of unidentified or previously-unknown malware. Since activity measures are correlated to application parameters, the machine learning-based anomaly detection features described herein need not have prior knowledge of specific attack patterns or characteristics of malware. As such, the features described herein may provide application security with increased effectiveness and robustness. Moreover, task-specific abnormalities are supported via task-specific models, which may provide greater granularity and flexibility in the identification of malware intrusions.

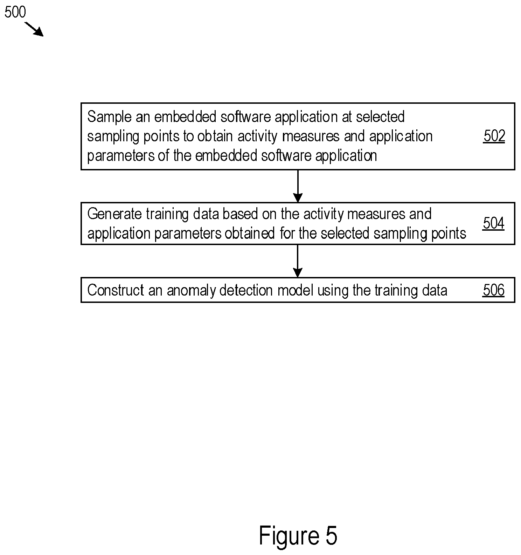

Figure 5 shows an example of logic 500 that a system may implement to support learning phase training of anomaly detection models. For example, the system 100 may implement the logic 500 as hardware, executable instructions stored on a machine-readable medium, or as a combination of both. The system 100 may implement the logic 500 via the anomaly model training engine 110, through which the system 100 may perform or execute the logic 500 as a method to use machine learning to train anomaly detection models for embedded software applications. The following description of the logic 500 is provided using the anomaly model training engine 110 as an implementation example. However, various other implementation options by the system 100 are possible.

In implementing the logic 500, the anomaly model training engine 110 may sample an embedded software application at selected sampling points to obtain activity measures and application parameters of the embedded software application (502). The anomaly model training engine 110 may also generate training data based on the activity measures and application parameters obtained for the selected sampling points (504) and construct an anomaly detection model using the training data (506). The anomaly model training engine 110 may perform the described steps 502, 504, and 506 in any of various ways described herein, including on a task-specific basis. In such a way, the anomaly model training engine 110 may train anomaly detection models configured to provide a determination of whether the embedded software application exhibits abnormal behavior based on activity measure and application parameter inputs.

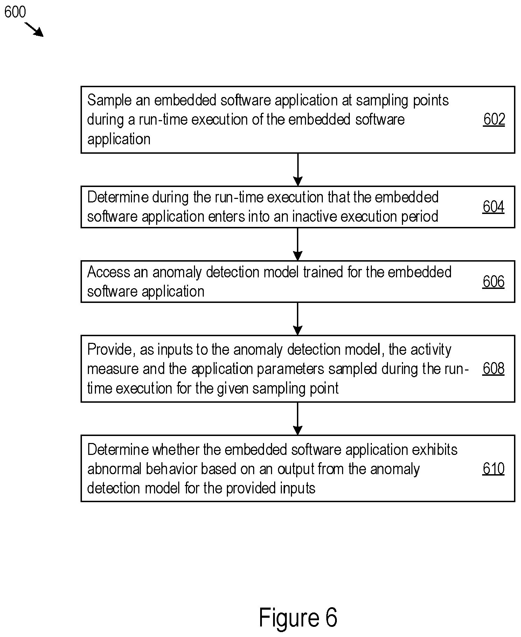

Figure 6 shows an example of logic 600 that a system may implement to support anomaly detections during run-time executions of embedded software. For example, the system 100 may implement the logic 600 as hardware, executable instructions stored on a machine-readable medium, or as a combination of both. The system 100 may implement the logic 600 via the anomaly detection engine 112, through which the system 100 may perform or execute the logic 600 as a method to detect abnormal behavior during run-time executions of embedded software applications. The following description of the logic 600 is provided using the anomaly detection engine 112 as an implementation example. However, various other implementation options by the system 100 are possible.

In implementing the logic 600, the anomaly detection engine 112 may sample an embedded software application at samplings point during a run-time execution of the embedded software application (602). In doing so, the anomaly detection engine 112 may obtain an activity measure and application parameters during the run-time execution. Then, the anomaly detection engine 112 may determine during the run-time execution that the embedded software application enters an inactive execution period (604), for example by determining the embedded software application completes execution of scheduled application tasks or by identifying that computing resources of an embedded system have gone idle or inactive.

In response to the determination that the embedded software application has entered an inactive execution period, the anomaly detection engine 112 may access an anomaly detection model trained for the embedded software (606) and provide, as inputs to the anomaly detection model, the activity measure and the application parameters sampled during the run-time execution (608). The anomaly detection engine 112 may also determine whether the embedded software application exhibits abnormal behavior based on an output from the anomaly detection model for the provided inputs (610).

The anomaly detection engine 112 may perform the described steps 602, 604, 606, 608, and 610 in any of various ways described herein, including on a task-specific basis. In such a way, the anomaly detection engine 112 may detect abnormal application behavior during run-time executions of embedded software applications.

The logic shown in Figures 5 and 6 provide examples by which a system may support machine learning-based anomaly detections for embedded software applications. Additional or alternative steps in the logic 500 and/or logic 600 are contemplated herein, including according to any features described herein for the anomaly model training engine 110, the anomaly detection engine 112, or combinations of both.

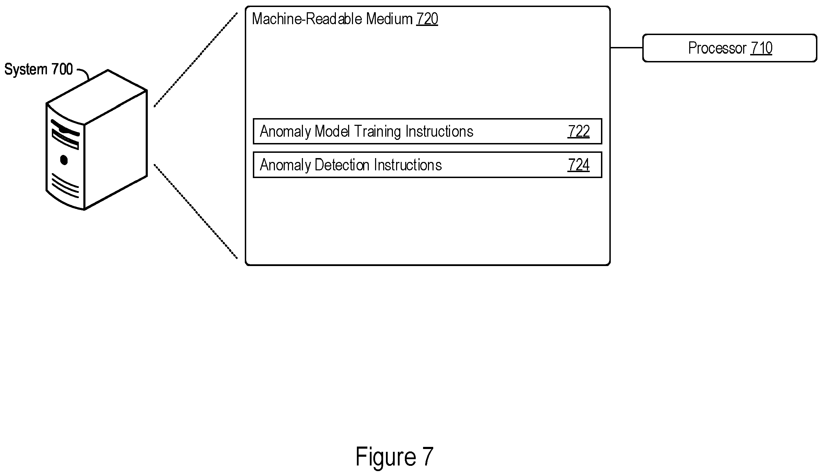

Figure 7 shows an example of a system 700 that supports machine learning-based anomaly detections for embedded software applications. The system 700 may include a processor 710, which may take the form of a single or multiple processors. The processor(s) 710 may include a central processing unit (CPU), microprocessor, or any hardware device suitable for executing instructions stored on a machine-readable medium. The system 700 may include a machine-readable medium 720. The machine-readable medium 720 may take the form of any non-transitory electronic, magnetic, optical, or other physical storage device that stores executable instructions, such as the anomaly model training instructions 722 and the anomaly detection instructions 724 shown in Figure 7. As such, the machine-readable medium 720 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The system 700 may execute instructions stored on the machine-readable medium 720 through the processor 710. Executing the instructions (e.g., the anomaly model training instructions 722 and anomaly detection instructions 724) may cause the system 700 to perform any of the machine learning-based anomaly detection features described herein, including according to any of the features with respect to the anomaly model training engine 110, the anomaly detection engine 112, or combinations of both.

For example, execution of the anomaly model training instructions 722 by the processor 710 may cause the system 700 to sample an embedded software application at a given sampling point to obtain an activity measure of the embedded software application since a previous sampling point and application parameters for the embedded software application at the given sampling point. Execution of the anomaly model training instructions 722 by the processor 710 may also cause the system 700 to generate training data based on the activity measure and the application parameters obtained for the given sampling point and construct an anomaly detection model using the training data. The constructed anomaly detection model may be configured to provide a determination of whether the embedded software application exhibits abnormal behavior based on activity measure and application parameter inputs.

Execution of the anomaly detection instructions 724 by the processor 710 may cause the system 700 to sample an embedded software application at a given sampling point during a run-time execution of the embedded software application to obtain an activity measure and application parameters during the run-time execution and determine, during the run-time execution, that the embedded software application enters an inactive execution period. Execution of the anomaly detection instructions 724 by the processor 710 may further cause the system 700 to, in response, access an anomaly detection model, the anomaly detection model configured to provide a determination of whether the embedded software application exhibits abnormal behavior based on activity measure and application parameter inputs; provide, as inputs to the anomaly detection model, the activity measure and the application parameters sampled during the run-time execution; and determine whether the embedded software application exhibits abnormal behavior based on an output from the anomaly detection model for the provided inputs.

Any additional or alternative features as described herein may be implemented via the anomaly model training instructions 722, anomaly detection instructions 724, or a combination of both.

The systems, methods, devices, and logic described above, including the anomaly model training engine 110 and the anomaly detection engine 112, may be implemented in many different ways in many different combinations of hardware, logic, circuitry, and executable instructions stored on a machine-readable medium. For example, the anomaly model training engine 110, the anomaly detection engine 112, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine readable instructions stored on the medium, which when executed in an endpoint, computer system, or other device, cause the device to perform operations according to any of the description above, including according to any features of the anomaly model training engine 110, the anomaly detection engine 112, or combinations thereof.

The processing capability of the systems, devices, and engines described herein, including the anomaly model training engine 110 and the anomaly detection engine 112, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible.

## Claims

1. A system (100) comprising:
an anomaly model training engine (110) configured to:
sample an embedded software application (212) at a given sampling point to obtain:
an activity measure (231, 331, 431) of the embedded software application (212) since a previous sampling point; and
application parameters (232, 332, 432) for the embedded software application (212) at the given sampling point;
generate training data (240, 340) based on the activity measure (231, 331, 431) and the application parameters (232, 332, 432) obtained for the given sampling point;
construct an anomaly detection model (250) using the training data (240, 340), the anomaly detection model (250) configured to provide a determination (460) of whether the embedded software application (212) exhibits abnormal behavior based on activity measure and application parameter inputs; and an anomaly detection engine (112) configured to:
sample the embedded software application (212) at the given sampling point during a run-time execution of the embedded software application (212) to obtain an activity measure (231, 331, 431) and application parameters (232, 332, 432) during the run-time execution;
determine, during the run-time execution, that the embedded software application (212) enters an inactive execution period, and in response:
provide, as inputs to the anomaly detection model (250), the activity measure (231, 331, 431) and the application parameters (232, 332, 432) sampled during the run-time execution; and
determine whether the embedded software application (212) exhibits abnormal behavior based on an output from the anomaly detection model (250) for the provided inputs.

2. The system of claim 1, wherein:
the anomaly model training engine (110) is configured to sample the embedded software application (212) during a learning phase in which execution of the embedded software application (212) is performed through an emulator (214); and
the anomaly detection engine (112) is configured to sample the embedded software application (212) during the run-time execution in which execution of the embedded software application (212) is performed by a hardware component (412) that the embedded software application (212) is embedded within.

3. The system of claim 1, wherein the anomaly model training engine (110) is further configured to:
identify a given application task being executed by the embedded software application (212) at the given sampling point; and
construct the anomaly detection model (250) to include multiple task-specific anomaly detection models (351, 352) including a task-specific anomaly detection model (351, 352) for the given application task.

4. The system of claim 3, wherein the anomaly detection engine (112) is further configured to:
sample the embedded software application (212) at multiple sampling points during the run-time execution; and
select among the multiple task-specific anomaly detection models (351, 352) to use for sampled activity measures (231, 331, 431) and application parameters (232, 332, 432) at the multiple sampling points based on a given application task being executed by the embedded software application (212) at the multiple sampling points.

5. The system of claim 1, wherein the activity measure (231, 331, 431) comprises an instruction count executed since the previous sampling point, an execution time since the previous sampling point, or a combination of both.

6. The system of claim 1, wherein the anomaly model training engine is configured to obtain the application parameters (232, 332, 432) for the embedded software application (212) at the given sampling point from global variables or static variables stored by the embedded software application (212).

7. The system of claim 1, wherein the anomaly model training engine is configured to generate the training data (240, 340) further by performing a parameter selection process to determine a selected subset of the obtained application parameters (232, 332, 432) to include in the training data (240, 340).

8. The system of claim 7, wherein the anomaly model training engine is configured to perform the parameter selection process via statistical correlation, consistency checks, or a combination of both.

9. The system of claim 1, wherein the anomaly detection engine is further configured to:
provide the inputs to the anomaly detection model (250) and determine whether the embedded software application (212) exhibits abnormal behavior using the anomaly detection model (250) while the embedded software application (212) is in the inactive execution period.

10. A method comprising:
by an embedded system (210, 410):
sampling (602) an embedded software application (212) at a given sampling point during a run-time execution of the embedded software application (212) to obtain an activity measure (231, 331, 431) and application parameters (232, 332, 432) during the run-time execution;
determining (604), during the run-time execution, that the embedded software application (212) enters an inactive execution period, and in response:
accessing (606) an anomaly detection model (250), the anomaly detection model (250) configured to provide a determination (460) of whether the embedded software application (212) exhibits abnormal behavior based on activity measure (231, 331, 431) and application parameter inputs;
providing (608), as inputs to the anomaly detection model (250), the activity measure (231, 331, 431) and the application parameters (232, 332, 432) sampled during the run-time execution for the given sampling point; and
determining (610) whether the embedded software application (212) exhibits abnormal behavior based on an output from the anomaly detection model (250) for the provided inputs;
further comprising training the anomaly detection model (250) during a learning phase by:
sampling (502) the embedded software application (212) at the given sampling point to obtain:
an activity measure (231, 331, 431) of the embedded software application (212) since a previous sampling point; and
application parameters (232, 332, 432) for the embedded software application (212) at the given sampling point;
generating (504) training data (240, 340) based on the activity measure (231, 331, 431) and the application parameters (232, 332, 432) obtained for the given sampling point; and
constructing (506) the anomaly detection model (250) using the training data (240, 340).

11. The method of claim 10, wherein the activity measure (231, 331, 431) comprises an instruction count executed since a previous sampling point, an execution time since the previous sampling point, or a combination of both.

12. The method of claim 10, wherein the anomaly detection model (250) comprises multiple task-specific anomaly detection models (351, 352) including different task-specific anomaly detection models (351, 352) for different application tasks, and further comprising:
sampling the embedded software application (212) at multiple sampling points during the run-time execution; and
selecting among the multiple task-specific anomaly detection models (351, 352) to use for sampled activity measures (231, 331, 431) and application parameters (232, 332, 432) at the multiple sampling points based on a given application task being executed by the embedded software application (212) at the multiple sampling points.

13. The method of claim 10, wherein sampling comprises obtaining the application parameters (232, 332, 432) for the embedded software application (212) at the given sampling point from global variables or static variables stored by the embedded software application (212).

14. A non-transitory machine-readable medium (700) comprising instructions (722, 724) that, when executed by a processor (710), causes an embedded system (210, 410) to:
sample an embedded software application (212) at a given sampling point during a run-time execution of the embedded software application (212) to obtain an activity measure (231, 331, 431) and application parameters (232, 332, 432) during the run-time execution;
determine, during the run-time execution, that the embedded software application (212) enters an inactive execution period, and in response:
access an anomaly detection model (250), the anomaly detection model (250) configured to provide a determination (460) of whether the embedded software application (212) exhibits abnormal behavior based on activity measure (231, 331, 431) and application parameter inputs;
provide, as inputs to the anomaly detection model (250), the activity measure (231, 331, 431) and the application parameters (232, 332, 432) sampled during the run-time execution; and
determine whether the embedded software application (212) exhibits abnormal behavior based on an output from the anomaly detection model (250) for the provided inputs;
wherein the anomaly model training engine (110) during a learning phase causes to:
sample (502) the embedded software application (212) at the given sampling point to obtain:
an activity measure (231, 331, 431) of the embedded software application (212) since a previous sampling point; and
application parameters (232, 332, 432) for the embedded software application (212) at the given sampling point;
generate (504) training data (240, 340) based on the activity measure (231, 331, 431) and the application parameters (232, 332, 432) obtained for the given sampling point; and
construct (506) the anomaly detection model (250) using the training data (240, 340).

## Patentansprüche

1. System (100), umfassend:
eine Anomaliemodelltrainings-Engine (110), die ausgelegt ist zum:
Abtasten einer eingebetteten Softwareanwendung (212) an einem gegebenen Abtastpunkt zum Erhalten:
eines Aktivitätsmaßes (231, 331, 431) der eingebetteten Softwareanwendung (212) seit einem vorherigen Abtastpunkt; und
von Anwendungsparametern (232, 332, 432) für die eingebettete Softwareanwendung (212) an dem gegebenen Abtastpunkt;
Erzeugen von Trainingsdaten (240, 340) basierend auf dem Aktivitätsmaß (231, 331, 431) und den Anwendungsparametern (232, 332, 432), die für den gegebenen Abtastpunkt erhalten wurden;
Konstruieren eines Anomaliedetektionsmodells (250) unter Verwendung der Trainingsdaten (240, 340), wobei das Anomaliedetektionsmodell (250) ausgelegt ist zum Bereitstellen einer Bestimmung (460), ob die eingebettete Softwareanwendung (212) ein unnormales Verhalten zeigt, basierend auf Aktivitätsmaß- und Anwendungsparametereingaben; und eine Anomaliedetektions-Engine (112), ausgelegt zum:
Abtasten der eingebetteten Softwareanwendung (212) am gegebenen Abtastpunkt während einer Laufzeitausführung der eingebetteten Softwareanwendung (212) zum Erhalten eines Aktivitätsmaßes (231, 331, 431) und von Anwendungsparametern (232, 332, 432) während der Laufzeitausführung;
Bestimmen, während der Laufzeitausführung, dass die eingebettete Softwareanwendung (212) in eine inaktive Ausführungsperiode eintritt, und in Reaktion darauf:
Bereitstellen, als Eingänge für das Anomaliedetektionsmodell (250), des Aktivitätsmaßes (231, 331, 431) und der Anwendungsparameter (232, 332, 432), die während der Laufzeitausführung abgetastet wurden; und
Bestimmen, ob die eingebettete Softwareanwendung (212) ein unnormales Verhalten zeigt, basierend auf einem Ausgang vom Anomaliedetektionsmodell (250) für die bereitgestellten Eingänge.

2. System nach Anspruch 1, wobei:
die Anomaliemodelltrainings-Engine (110) ausgelegt ist zum Abtasten der eingebetteten Softwareanwendung (212) während einer Lernphase, in der Ausführung der eingebetteten Softwareanwendung (212) durch einen Emulator (214) durchgeführt wird; und
die Anomaliedetektions-Engine (112) ausgelegt ist zum Abtasten der eingebetteten Softwareanwendung (212) während der Laufzeitausführung, in der Ausführung der eingebetteten Softwareanwendung (212) durch eine Hardwarekomponente (412) durchgeführt wird, in die die eingebettete Softwareanwendung (212) eingebettet ist.

3. System nach Anspruch 1, wobei die Anomaliemodelltrainings-Engine (110) ferner ausgelegt ist zum:
Identifizieren einer gegebenen Anwendungsaufgabe, die durch die eingebettete Softwareanwendung (212) an dem gegebenen Abtastpunkt ausgeführt wird; und
Konstruieren des Anomaliedetektionsmodells (250) zum Einschließen mehrerer aufgabenspezifischer Anomaliedetektionsmodelle (351, 352), umfassend ein aufgabenspezifisches Anomaliedetektionsmodell (351, 352) für die gegebene Anwendungsaufgabe.

4. System nach Anspruch 3, wobei die Anomaliedetektions-Engine (112) ferner ausgelegt ist zum:
Abtasten der eingebetteten Softwareanwendung (212) an mehreren Abtastpunkten während der Laufzeitausführung; und
Auswählen unter den mehreren aufgabenspezifischen Anomaliedetektionsmodellen (351, 352) zur Verwendung für abgetastete Aktivitätsmaße (231, 331, 431) und Anwendungsparameter (232, 332, 432) an den mehreren Abtastpunkten basierend auf einer gegebenen Anwendungsaufgabe, die durch die eingebettete Softwareanwendung (212) an den mehreren Abtastpunkten ausgeführt wird.

5. System nach Anspruch 1, wobei das Aktivitätsmaß (231, 331, 431) einen Zähler für Anweisungen, die seit dem vorherigen Abtastpunkt ausgeführt wurden, eine Ausführungszeit seit dem vorherigen Abtastpunkt oder eine Kombination aus beidem umfasst.

6. System nach Anspruch 1, wobei die Anomaliemodelltrainings-Engine ausgelegt ist zum Erhalten der Anwendungsparameter (232, 332, 432) für die eingebettete Softwareanwendung (212) am gegebenen Abtastpunkt aus globalen Variablen oder statischen Variablen, die durch die eingebettete Softwareanwendung (212) gespeichert wurden.

7. System nach Anspruch 1, wobei die Anomaliemodelltrainings-Engine ausgelegt ist zum weiteren Erzeugen der Trainingsdaten (240, 340) durch Durchführen eines Parameterauswahlprozesses zum Bestimmen einer ausgewählten Teilmenge der erhaltenen Anwendungsparameter (232, 332, 432) zum Einschließen in die Trainingsdaten (240, 340).

8. System nach Anspruch 7, wobei die Anomaliemodelltrainings-Engine ausgelegt ist zum Durchführen des Parameterauswahlprozesses über statistische Korrelation, Konsistenzprüfungen oder eine Kombination aus beiden.

9. System nach Anspruch 1, wobei die Anomaliedetektions-Engine ferner ausgelegt ist zum:
Bereitstellen der Eingänge für das Anomaliedetektionsmodell (250) und Bestimmen, ob die eingebettete Softwareanwendung (212) unnormales Verhalten zeigt, unter Verwendung des Anomaliedetektionsmodells (250), während die eingebettete Softwareanwendung (212) in der inaktiven Ausführungsperiode ist.

10. Verfahren, umfassend:
durch ein eingebettetes System (210, 410):
Abtasten (602) einer eingebetteten Softwareanwendung (212) an einem gegebenen Abtastpunkt während einer Laufzeitausführung der eingebetteten Softwareanwendung (212) zum Erhalten eines Aktivitätsmaßes (231, 331, 431) und von Anwendungsparametern (232, 332, 432) während der Laufzeitausführung;
Bestimmen (604), während der Laufzeitausführung, dass die eingebettete Softwareanwendung (212) in eine inaktive Ausführungsperiode eintritt, und in Reaktion darauf:
Zugreifen (606) auf ein Anomaliedetektionsmodell (250), wobei das Anomaliedetektionsmodell (250) ausgelegt ist zum Bereitstellen einer Bestimmung (460), ob die eingebettete Softwareanwendung (212) unnormales Verhalten zeigt, basierend auf einem Aktivitätsmaß (231, 331, 431) und Anwendungsparametereingängen;
Bereitstellen (608), als Eingänge für das Anomaliedetektionsmodell (250), des Aktivitätsmaßes (231, 331, 431) und der Anwendungsparameter (232, 332, 432), die während der Laufzeitausführung für den gegebenen Abtastpunkt abgetastet wurden; und
Bestimmen (610), ob die eingebettete Softwareanwendung (212) ein unnormales Verhalten zeigt, basierend auf einem Ausgang vom Anomaliedetektionsmodell (250) für die bereitgestellten Eingänge.
ferner umfassend Trainieren des Anomaliedetektionsmodells (250) während einer Lernphase durch:
Abtasten (502) der eingebetteten Softwareanwendung (212) am gegebenen Abtastpunkt zum Erhalten:
eines Aktivitätsmaßes (231, 331, 431) der eingebetteten Softwareanwendung (212) seit einem vorherigen Abtastpunkt; und
von Anwendungsparametern (232, 332, 432) für die eingebettete Softwareanwendung (212) an dem gegebenen Abtastpunkt;
Erzeugen (504) von Trainingsdaten (240, 340) basierend auf dem Aktivitätsmaß (231, 331, 431) und den Anwendungsparametern (232, 332, 432), die für den gegebenen Abtastpunkt erhalten wurden; und
Konstruieren (506) des Anomaliedetektionsmodells (250) unter Verwendung der Trainingsdaten (240, 340).

11. Verfahren nach Anspruch 10, wobei das Aktivitätsmaß (231, 331, 431) einen Zähler für Anweisungen, die seit einem vorherigen Abtastpunkt ausgeführt wurden, eine Ausführungszeit seit dem vorherigen Abtastpunkt oder eine Kombination aus beidem umfasst.

12. Verfahren nach Anspruch 10, wobei das Anomaliedetektionsmodell (250) mehrere aufgabenspezifische Anomaliedetektionsmodelle (351, 352) umfasst, umfassend unterschiedliche aufgabenspezifische Anomaliedetektionsmodelle (351, 352) für unterschiedliche Anwendungsaufgaben, und ferner umfassend:
Abtasten der eingebetteten Softwareanwendung (212) an mehreren Abtastpunkten während der Laufzeitausführung; und
Auswählen unter den mehreren aufgabenspezifischen Anomaliedetektionsmodellen (351, 352) zur Verwendung für abgetastete Aktivitätsmaße (231, 331, 431) und Anwendungsparameter (232, 332, 432) an den mehreren Abtastpunkten basierend auf einer gegebenen Anwendungsaufgabe, die durch die eingebettete Softwareanwendung (212) an den mehreren Abtastpunkten ausgeführt wird.

13. Verfahren nach Anspruch 10, wobei Abtasten Erhalten der Anwendungsparameter (232, 332, 432) für die eingebettete Softwareanwendung (212) am gegebenen Abtastpunkt aus globalen Variablen oder statischen Variablen umfasst, die durch die eingebettete Softwareanwendung (212) gespeichert wurden.

14. Nicht-flüchtiges maschinenlesbares Medium (700), das Anweisungen (722, 724) umfasst, die, wenn sie von einem Prozessor (710) ausgeführt werden, ein eingebettetes System (210, 410) veranlassen zum:
Abtasten einer eingebetteten Softwareanwendung (212) an einem gegebenen Abtastpunkt während einer Laufzeitausführung der eingebetteten Softwareanwendung (212) zum Erhalten eines Aktivitätsmaßes (231, 331, 431) und von Anwendungsparametern (232, 332, 432) während der Laufzeitausführung;
Bestimmen, während der Laufzeitausführung, dass die eingebettete Softwareanwendung (212) in eine inaktive Ausführungsperiode eintritt, und in Reaktion darauf:
Zugreifen auf ein Anomaliedetektionsmodell (250), wobei das Anomaliedetektionsmodell (250) ausgelegt ist zum Bereitstellen einer Bestimmung (460), ob die eingebettete Softwareanwendung (212) unnormales Verhalten zeigt, basierend auf einem Aktivitätsmaß (231, 331, 431) und Anwendungsparametereingängen;
Bereitstellen, als Eingänge für das Anomaliedetektionsmodell (250), des Aktivitätsmaßes (231, 331, 431) und der Anwendungsparameter (232, 332, 432), die während der Laufzeitausführung abgetastet wurden; und
Bestimmen, ob die eingebettete Softwareanwendung (212) ein unnormales Verhalten zeigt, basierend auf einem Ausgang vom Anomaliedetektionsmodell (250) für die bereitgestellten Eingänge.
wobei die Anomaliemodelltrainings-Engine (110) während einer Lernphase veranlasst zum:
Abtasten (502) der eingebetteten Softwareanwendung (212) am gegebenen Abtastpunkt zum Erhalten:
eines Aktivitätsmaßes (231, 331, 431) der eingebetteten Softwareanwendung (212) seit einem vorherigen Abtastpunkt; und
von Anwendungsparametern (232, 332, 432) für die eingebettete Softwareanwendung (212) an dem gegebenen Abtastpunkt;
Erzeugen (504) von Trainingsdaten (240, 340) basierend auf dem Aktivitätsmaß (231, 331, 431) und den Anwendungsparametern (232, 332, 432), die für den gegebenen Abtastpunkt erhalten wurden; und
Konstruieren (506) des Anomaliedetektionsmodells (250) unter Verwendung der Trainingsdaten (240, 340).

## Revendications

1. Système (100) comportant :
un moteur (110) d'entraînement de modèle d'anomalies configuré pour :
échantillonner une application logicielle embarquée (212) en un point d'échantillonnage donné pour obtenir :
une mesure (231, 331, 431) d'activité de l'application logicielle embarquée (212) depuis un point d'échantillonnage précédent ; et
des paramètres (232, 332, 432) d'application relatifs à l'application logicielle embarquée (212) au point d'échantillonnage donné ;
générer des données (240, 340) d'apprentissage d'après la mesure (231, 331, 431) d'activité et les paramètres (232, 332, 432) d'application obtenus pour le point d'échantillonnage donné ;
construire un modèle (250) de détection d'anomalies à l'aide des données (240, 340) d'apprentissage, le modèle (250) de détection d'anomalies étant configuré pour fournir une détermination (460) selon laquelle l'application logicielle embarquée (212) présente ou non un comportement anormal d'après des entrées de mesure d'activité et de paramètres d'application; et un moteur (112) de détection d'anomalies configuré pour :
échantillonner l'application logicielle embarquée (212) au point d'échantillonnage donné pendant une exécution en exploitation de l'application logicielle embarquée (212) pour obtenir une mesure (231, 331, 431) d'activité et des paramètres (232, 332, 432) d'application pendant l'exécution en exploitation ;
déterminer, pendant l'exécution en exploitation, que l'application logicielle embarquée (212) entre dans une période d'exécution inactive, et en réponse :
fournir en tant qu'entrées, au modèle (250) de détection d'anomalies, la mesure (231, 331, 431) d'activité et les paramètres (232, 332, 432) d'application échantillonnés pendant l'exécution en exploitation ; et
déterminer si l'application logicielle embarquée (212) présente un comportement anormal d'après une sortie provenant du modèle (250) de détection d'anomalies pour les entrées fournies.

2. Système selon la revendication 1 :
le moteur (110) d'entraînement de modèle d'anomalies étant configuré pour échantillonner l'application logicielle embarquée (212) pendant une phase d'apprentissage lors de laquelle l'exécution de l'application logicielle embarquée (212) est effectuée à travers un émulateur (214) ; et
le moteur (112) de détection d'anomalies étant configuré pour échantillonner l'application logicielle embarquée (212) pendant l'exécution en exploitation lors de laquelle l'exécution de l'application logicielle embarquée (212) est effectuée par un composant matériel (412) à l'intérieur duquel l'application logicielle embarquée (212) est incorporée.

3. Système selon la revendication 1, le moteur (110) d'entraînement de modèle d'anomalies étant en outre configuré pour :
identifier une tâche d'application donnée en cours d'exécution par l'application logicielle embarquée (212) au point d'échantillonnage donné ; et
construire le modèle (250) de détection d'anomalies de façon à inclure de multiples modèles (351, 352) de détection d'anomalies spécifiques à des tâches comprenant un modèle (351, 352) de détection d'anomalies spécifique à une tâche pour la tâche d'application donnée.

4. Système selon la revendication 3, le moteur (112) de détection d'anomalies étant en outre configuré pour :
échantillonner l'application logicielle embarquée (212) à de multiples points d'échantillonnage pendant l'exécution en exploitation ; et
choisir entre les multiples modèles (351, 352) de détection d'anomalies spécifiques à des tâches à utiliser pour des mesures (231, 331, 431) d'activité et des paramètres (232, 332, 432) d'application échantillonnés aux multiples points d'échantillonnage d'après une tâche d'application donnée en cours d'exécution par l'application logicielle embarquée (212) aux multiples points d'échantillonnage.

5. Système selon la revendication 1, la mesure (231, 331, 431) d'activité comportant un comptage d'instructions exécutées depuis le point d'échantillonnage précédent, un temps d'exécution depuis le point d'échantillonnage précédent, ou une combinaison des deux.

6. Système selon la revendication 1, le moteur d'entraînement de modèle d'anomalies étant configuré pour obtenir les paramètres (232, 332, 432) d'application relatifs à l'application logicielle embarquée (212) au point d'échantillonnage donné à partir de variables globales ou de variables statiques stockées par l'application logicielle embarquée (212).

7. Système selon la revendication 1, le moteur d'entraînement de modèle d'anomalies étant configuré pour générer les données (240, 340) d'apprentissage en effectuant en outre un processus de sélection de paramètres pour déterminer un sous-ensemble sélectionné des paramètres (232, 332, 432) d'application obtenus à inclure dans les données (240, 340) d'apprentissage.

8. Système selon la revendication 7, le moteur d'entraînement de modèle d'anomalies étant configuré pour effectuer le processus de sélection de paramètres par l'intermédiaire d'une corrélation statistique, de contrôles de cohérence, ou d'une combinaison des deux.

9. Système selon la revendication 1, le moteur de détection d'anomalies étant en outre configuré pour :
fournir les entrées au modèle (250) de détection d'anomalies et déterminer si l'application logicielle embarquée (212) présente un comportement anormal à l'aide du modèle (250) de détection d'anomalies tandis que l'application logicielle embarquée (212) est dans la période d'exécution inactive.

10. Procédé comportant :
par un système incorporé (210, 410) :
l'échantillonnage (602) d'une application logicielle embarquée (212) en un point d'échantillonnage donné pendant une exécution en exploitation de l'application logicielle embarquée (212) pour obtenir une mesure (231, 331, 431) d'activité et des paramètres (232, 332, 432) d'application pendant l'exécution en exploitation ;
le fait de déterminer (604), pendant l'exécution en exploitation, que l'application logicielle embarquée (212) entre dans une période d'exécution inactive, et en réponse :
l'accès (606) à un modèle (250) de détection d'anomalies, le modèle (250) de détection d'anomalies étant configuré pour fournir une détermination (460) selon laquelle l'application logicielle embarquée (212) présente ou non un comportement anormal d'après des entrées de mesure (231, 331, 431) d'activité et de paramètres d'application ;
la fourniture (608) en tant qu'entrées, au modèle (250) de détection d'anomalies, de la mesure (231, 331, 431) d'activité et des paramètres (232, 332, 432) d'application échantillonnés pendant l'exécution en exploitation pour le point d'échantillonnage donné ; et
le fait de déterminer (610) si l'application logicielle embarquée (212) présente un comportement anormal d'après une sortie provenant du modèle (250) de détection d'anomalies pour les entrées fournies ;
comportant en outre l'entraînement du modèle (250) de détection d'anomalies pendant une phase d'apprentissage :
en échantillonnant (502) l'application logicielle embarquée (212) au point d'échantillonnage donné pour obtenir :
une mesure (231, 331, 431) d'activité de l'application logicielle embarquée (212) depuis un point d'échantillonnage précédent ; et
des paramètres (232, 332, 432) d'application relatifs à l'application logicielle embarquée (212) au point d'échantillonnage donné ;
en générant (504) des données (240, 340) d'apprentissage d'après la mesure (231, 331, 431) d'activité et les paramètres (232, 332, 432) d'application obtenus pour le point d'échantillonnage donné ; et
en construisant (506) le modèle (250) de détection d'anomalies à l'aide des données (240, 340) d'apprentissage.

11. Procédé selon la revendication 10, la mesure (231, 331, 431) d'activité comportant un comptage d'instructions exécutées depuis un point d'échantillonnage précédent, un temps d'exécution depuis le point d'échantillonnage précédent, ou une combinaison des deux.

12. Procédé selon la revendication 10, le modèle (250) de détection d'anomalies comportant de multiples modèles (351, 352) de détection d'anomalies spécifiques à des tâches comprenant différents modèles (351, 352) de détection d'anomalies spécifiques à des tâches pour différentes tâches d'application, et comportant en outre :
l'échantillonnage de l'application logicielle embarquée (212) à de multiples points d'échantillonnage pendant l'exécution en exploitation ; et
une sélection parmi les multiples modèles (351, 352) de détection d'anomalies spécifiques à des tâches à utiliser pour des mesures (231, 331, 431) d'activité et des paramètres (232, 332, 432) d'application échantillonnés aux multiples points d'échantillonnage d'après une tâche d'application donnée en cours d'exécution par l'application logicielle embarquée (212) aux multiples points d'échantillonnage.

13. Procédé selon la revendication 10, l'échantillonnage comportant l'obtention des paramètres (232, 332, 432) d'application relatifs à l'application logicielle embarquée (212) au point d'échantillonnage donné à partir de variables globales ou de variables statiques stockées par l'application logicielle embarquée (212).

14. Support non transitoire (700) lisible par machine comportant des instructions (722, 724) qui, lorsqu'elles sont exécutées par un processeur (710), amènent un système incorporé (210, 410) à :
échantillonner une application logicielle embarquée (212) en un point d'échantillonnage donné pendant une exécution en exploitation de l'application logicielle embarquée (212) pour obtenir une mesure (231, 331, 431) d'activité et des paramètres (232, 332, 432) d'application pendant l'exécution en exploitation ;
déterminer, pendant l'exécution en exploitation, que l'application logicielle embarquée (212) entre dans une période d'exécution inactive, et en réponse :
accéder à un modèle (250) de détection d'anomalies, le modèle (250) de détection d'anomalies étant configuré pour fournir une détermination (460) selon laquelle l'application logicielle embarquée (212) présente ou non un comportement anormal d'après des entrées de mesure (231, 331, 431) d'activité et de paramètres d'application ;
fournir en tant qu'entrées, au modèle (250) de détection d'anomalies, la mesure (231, 331, 431) d'activité et les paramètres (232, 332, 432) d'application échantillonnés pendant l'exécution en exploitation ; et
déterminer si l'application logicielle embarquée (212) présente un comportement anormal d'après une sortie provenant du modèle (250) de détection d'anomalies pour les entrées fournies ;
le moteur (110) d'entraînement de modèle d'anomalies, pendant une phase d'apprentissage, faisant en sorte :
d'échantillonner (502) l'application logicielle embarquée (212) au point d'échantillonnage donné pour obtenir :
une mesure (231, 331, 431) d'activité de l'application logicielle embarquée (212) depuis un point d'échantillonnage précédent ; et
des paramètres (232, 332, 432) d'application relatifs à l'application logicielle embarquée (212) au point d'échantillonnage donné ;
de générer (504) des données (240, 340) d'apprentissage d'après la mesure (231, 331, 431) d'activité et les paramètres (232, 332, 432) d'application obtenus pour le point d'échantillonnage donné ; et
de construire (506) le modèle (250) de détection d'anomalies à l'aide des données (240, 340) d'apprentissage.
